# EUROPÄISCHE PATENTSCHRIFT

(11) **EP 2 890 279 B1**
(45) Veröffentlichungstag und Bekanntmachung des Hinweises auf die Patenterteilung: **28.09.2016**
(21) Anmeldenummer: 13770833.5
(22) Anmeldetag: 28.08.2013
(51) Int. Cl.: A47J 31/56, A47J 31/60, A47J 31/44, A47J 31/46, B08B 3/08, C02F 1/00

(54) **VORRICHTUNG ZUM BEREITSTELLEN VON FLÜSSIGKEIT FÜR EINEN GETRÄNKEAUTOMATEN UND DEREN VERWENDUNG**
DEVICE FOR PROVIDING LIQUID FOR A DRINKS MACHINE AND USE OF SAME
DISPOSITIF DESTINÉ À PRÉPARER UN LIQUIDE POUR UN AUTOMATE DE BOISSONS ET SON UTILISATION

(30) Priorität: 30.08.2012 EP 12405093
(43) Veröffentlichungstag der Anmeldung: 08.07.2015
(73) Patentinhaber: JURA Elektroapparate AG, 4626 Niederbuchsiten (CH)
(72) Erfinder: REYHANLOO, Shahryar, CH-6405 Immensee (CH)
(74) Vertreter: EGLI-EUROPEAN PATENT ATTORNEYS
(86) Internationale Anmeldenummer: PCT/CH2013/000153
(87) Internationale Veröffentlichungsnummer: WO 2014/032195

(56) Entgegenhaltungen:
- EP-A1- 2 363 051
- WO-A1-00/47058
- WO-A1-03/002449
- US-B1- 6 401 729

## Beschreibung

Die Erfindung betrifft eine Kaffeemaschine mit einer Vorrichtung zum Bereitstellen von Flüssigkeit für die Kaffeemaschine sowie ein Verfahren zum Reinigen eines Wasserbehälters der Kaffeemaschine.

Im Halbgastronomie- und Gastronomiebereich kommen an Getränkeautomaten, insbesondere an Kaffeemaschinen oder Kaffeeautomaten vorwiegend Vorrichtungen zum Bereitstellen von Flüssigkeit, beispielsweise Brühflüssigkeit, zum Einsatz, welche einen Wasserbehälter aufweisen, der als Pufferspeicher dient und mittels eines Wasserzulaufs direkt mit einem Wasseranschluss, insbesondere mit dem Trinkwassernetz verbunden ist bzw. intervallweise verbunden wird. Durch das Vorsehen eines derartigen intervallweise ansteuerbaren "Festwasseranschlusses" kann in dem Wasserbehälter stets frisches Wasser zur Zubereitung beispielsweise eines Kaffeegetränkes vorrätig gehalten werden, was mögliche Geschmacksbeeinträchtigungen infolge abgestandenen Wassers reduziert.

Aus der Technik bekannte Vorrichtungen zum Bereitstellen von Flüssigkeit für einen Getränkeautomaten mit einem direkt mit dem Trinkwassernetz verbindbaren Wasserbehälter sind hierbei gewöhnlicherweise mit einem Arbeitsschwimmer oder sonstigen Sensoreinrichtungen versehen, welche beim Auf- bzw. Nachfüllen des Wasserbehälters über den Festwasseranschluss beim Erreichen eines Sollwasserstandes unter Zwischenschaltung einer geeigneten Steuereinrichtung mittels eines Reed-Schalters ein Zulaufventil schliessen, das in die Strecke zwischen Wasseranschluss und Wasserzulauf eingebaut ist.

Das Dokument US 6401729 B1 offenbart eine Vorrichtung zum Spülen oder zur Reinigung von Reservoirs, in denen Getränke wie Kaffee, Tee oder konzentrierte Getränke gelagert werden, wobei diese Vorrichtung geeignet sein soll, zwei derartige Reservoirs für Getränke gleichzeitig spülen zu können. Die aus US 6401729 B1 bekannte Vorrichtung weist einen Wasserbehälter (96) mit mindestens einem Wasserzulauf (104) zum Füllen des Wasserbehälters (96) auf, welcher über ein Ventil (102) mit einem Wasseranschluss (100) verbunden ist. Der Wasserzulauf (104) kann mithilfe einer Steuereinrichtung (94) über das Ventil (102) angesteuert werden. Der Wasserbehälter (96) wird so lange von der Steuereinrichtung mit unter Druck stehendem Wasser befüllt, bis ein Füllstandsensor (106) ein Signal abgibt, wonach der Wasserbehälter (96) seinen ersten, d.h. vollen Flüssigkeitsfüllstand erreicht oder überschritten hat. Zu diesem Zweck ist der Füllstandsensor (106) elektronisch mit der Steuereinrichtung (94) verbunden. Diese Steuereinrichtung (94) ist auch dazu ausgelegt, den Wasserzulauf in Abhängigkeit von dem Signal des mindestens einen Füllstandsensors (106) anzusteuern. Gemäss US 6401729 B1 wird das im Wasserbehälter (96) befindliche Spülwasser über eine Austragsleitung (108) zu einem Sprühkopf (114) geleitet, sobald ein Dosierventil (110) durch die Steuereinrichtung (94) geöffnet wird. Daraufhin wird das Sprühwasser über den Sprühkopf (114) in die Halterung (20) eingebracht, wodurch ein Brühprozess in Gang gesetzt wird, welcher hier nicht näher erläutert werden soll. US 6401729 B1 beschreibt zwar einen Reinigungsprozess, jedoch dient dieser nicht zur Reinigung des Wasserbehälters (96), sondern zur Reinigung der Getränkereservoirs 24 bzw. 26, d.h. eine Möglichkeit zur Entleerung bzw. Reinigung des Wasserbehälters (96) ist nicht beschrieben.

Beispielsweise ist aus der US-Patentschrift 5,063,836 eine Kaffeemaschine mit einem als Pufferspeicher ausgebildeten Wasserbehälter bekannt, welche zwei Wasserstandsensoren aufweist, die mit einer Steuereinrichtung verbunden sind. Hierbei ist das Zulaufventil zwischen dem Festwasseranschluss und dem Einlauf des Wasserbehälters, also dem Wasserzulauf, solange geöffnet, wie der unten liegende Wasserstandsensor nicht meldet, dass der Füllstand, auf dessen Höhe er innerhalb des Wasserbehälters angebracht ist, erreicht oder überschritten ist. Um zu verhindern, dass das Zulaufventil infolge eines Defektes des Wasserstandsensors oder gegebenenfalls auch einer Verschmutzung oder Verkalkung derart lange geöffnet bleibt, dass der Wasserbehälter überläuft, ist oberhalb des ersten Wasserstandsensors ein zweiter Wasserstandsensor angeordnet, der ein Schliessen des Zulaufventils durch Übermittlung eines entsprechenden Signals an die Steuereinrichtung sicherstellen soll, sobald ein Wasserfüllstand erreicht ist, auf dessen Höhe dieser zweite, oben liegende Sensor angebracht ist.

Derartige aus dem Stand der Technik bekannte Vorrichtungen weisen den Nachteil auf, dass eine Reinigung, beispielsweise in Form einer Entkalkung, nur schwer möglich ist. So ist es bei den aus dem Stand der Technik bekannten Vorrichtungen nicht möglich, eine Entkalkungsflüssigkeit bei einer vorgegebenen Konzentration bis zu einer Höhe in den Wasserbehälter zu füllen, bei welcher eine im Wesentlichen vollständige Reinigung bzw. Entkalkung aller innerhalb des Wasserbehälters angeordneten Bauteile gewährleistet ist. Weiterhin ist es bei dem aus dem Stand der Technik bekannten Vorrichtungen nicht möglich, eine einmal hinzu gegebene Reinigungs- bzw. Entkalkungsflüssigkeit konzentriert und im Wesentlichen vollständig aus dem Wasserbehälter zu entfernen.

Der vorliegenden Erfindung liegt die Aufgabe zugrunde, eine gattungsgemässe Kaffeemaschine mit einer Vorrichtung zum Bereitstellen von Flüssigkeit für die Kaffeemaschine dahingehend weiterzubilden, dass eine Reinigung bzw. eine Entkalkung einfacher und gründlicher möglich ist.

Diese Aufgabe wird erfindungsgemäss durch eine Kaffeemaschine gemäss dem unabhängigen Patentanspruch 1 gelöst. Insbesondere wird die Aufgabe dadurch gelöst, dass eine Kaffeemaschine mit einer Vorrichtung zum Bereitstellen von Flüssigkeit für die Kaffeemaschine angegeben wird, wobei die Vorrichtung aufweist: einen Wasserbehälter mit mindestens einem Wasserzulauf zum Füllen des Wasserbehälters, welcher Wasserzulauf mit einem Wasseranschluss, insbesondere mit einem Überdruck-Wasseranschluss und vorzugsweise mit einem Trinkwassernetz, ansteuerbar verbindbar ist, und mit einem Auslass zum Auslassen einer Flüssigkeit aus dem Wasserbehälter; eine Steuereinrichtung zum Ansteuern des ansteuerbar verbindbaren Wasserzulaufs und mindestens einen Füllstandsensor zum Erzeugen eines Signals, welches mindestens angibt, ob oder ob nicht ein erster Füllstand von Flüssigkeit innerhalb des Wasserbehälters erreicht oder überschritten ist. Dabei weist die Kaffeemaschine ausserdem auf: eine Wasserleitung, welche an den Auslass des Wasserbehälters derart angeschlossen ist, dass eine durch den Auslass aus dem Wasserbehälter ausgelassene Flüssigkeit durch die Wasserleitung abfliessen kann; einen Durchlauferhitzer und eine Brüheinheit zum Brühen von Kaffee, welche über die Wasserleitung und den Durchlauferhitzer derart mit dem Wasserbehälter verbunden ist, dass Wasser aus dem Wasserbehälter der Brüheinheit durch die Wasserleitung und den Durchlauferhitzer zuführbar ist, um ein Brühen von Kaffee zu ermöglichen. Dabei ist der mindestens eine Füllstandsensor zum Übermitteln des Signals mit der Steuereinrichtung verbindbar oder verbunden, wobei die Steuereinrichtung dazu ausgelegt ist, den Wasserzulauf in Abhängigkeit von dem Signal des mindestens einen Füllstandsensors und mindestens einem Betriebsmodus anzusteuern, und der Betriebsmodus wahlweise ein Füllmodus oder ein Entleerungsmodus ist. Die Vorrichtung weist ferner eine ansteuerbare Ablasseinrichtung zum Ablassen von Flüssigkeit aus dem Wasserbehälter durch den Auslass auf, wobei die Steuereinrichtung weiterhin dazu ausgelegt ist, im Füllmodus den Wasserzulauf mit dem Wasseranschluss zu verbinden, wenn der erste Füllstand nicht erreicht und nicht überschritten ist, und im Entleerungsmodus eine Verbindung des Wasserzulaufs mit dem Wasseranschluss unabhängig von dem ersten Füllstand zu unterbrechen. Die Steuereinrichtung ist ausserdem dazu ausgelegt ist, die Ablasseinrichtung durch Ansteuern der Ablasseinrichtung zum Ablassen von Flüssigkeit aus dem Wasserbehälter zu veranlassen.

Gemäss der Erfindung ist die Steuereinrichtung dazu ausgelegt ist, im Entleerungsmodus eine Verbindung des Wasserzulaufs mit dem Wasseranschluss zu unterbrechen und die Ablasseinrichtung zu veranlassen, eine im Wasserbehälter enthaltene Menge Flüssigkeit vollständig durch den Auslass abzulassen und durch die Wasserleitung und den Durchlauferhitzer abfliessen zu lassen, sodass ein vollständiges Entleeren des Wasserbehälters erfolgt.

Hierdurch ergibt sich der besondere Vorteil, dass der Wasserbehälter in einem entsprechendem Betriebsmodus beispielsweise zum Abschliessen eines Reinigungs- oder Entkalkungsvorganges vor einem erneuten Befüllen vollständig geleert werden kann, wodurch für einen nachfolgenden Getränkebezug eventuell auftretende Geschmacksbeeinträchtigungen minimiert werden.

So ist es beispielsweise vorgesehen, dass der mindestens eine Betriebsmodus aus mindestens zwei oder mehreren Betriebsmodi der Vorrichtung auswählbar ist. Beispielsweise ist die Vorrichtung so ausgebildet, dass sie mindestens wahlweise in einem Füllmodus oder einem Entleerungsmodus betrieben werden kann. In diesem Fall ist vorgesehen, dass der "mindestens eine Betriebsmodus" beispielsweise aus den beiden Betriebsmodi "Füllmodus" und "Entleerungsmodus" auswählbar ist, sodass der "mindestens eine Betriebsmodus" also wahlweise ein Füllmodus oder ein Entleerungsmodus der Vorrichtung ist. Ein derartiger Betriebsmodus kann manuell durch eine Bedienperson vorgewählt werden oder auch automatisch, beispielsweise durch eine Kommunikation zwischen der Kaffeemaschine und der Steuereinrichtung, ausgewählt werden. Hierdurch ist es möglich, die Befüllung den jeweils erforderlichen Gegebenheiten anzupassen. Insbesondere ist es möglich, den Füllmodus dann auszuwählen, wenn ein normaler Getränkebezug, beispielsweise also ein Kaffeebezug, angedacht ist, und den Entleerungsmodus dann anzuwählen, wenn nach dem Abschluss einer Reinigung oder Entkalkung oder bei Ausserbetriebnahme des Gerätes der Wasserbehälter möglichst vollständig entleert werden soll, wodurch Geschmacksbeeinträchtigungen beim nachfolgenden Kaffeebezug vermieden werden.

Des Weiteren ist es vorgesehen, dass die Steuereinrichtung weiterhin dazu ausgelegt ist, im Füllmodus den Wasserzulauf mit dem Wasseranschluss zu verbinden, wenn der erste Füllstand nicht erreicht und nicht überschritten ist. Hierdurch ist dann, wenn als Betriebsmodus der Füllmodus manuell oder automatisch vorgewählt wurde, gewährleistet, dass stets eine ausreichende Menge an Frischwasser für den nächsten Getränkebezug zur Verfügung steht, ohne dass der Füllstand des Wasserbehälters manuell kontrolliert werden müsste.

Dadurch, dass die erfindungsgemässe Vorrichtung ferner eine ansteuerbare Ablasseinrichtung zum Ablassen von Flüssigkeit aus dem Wasserbehälter aufweist, ist vorteilhafterweise ein vereinfachtes und durch die Ansteuerbarkeit der Ablasseinrichtung auch automatisierbares Entleeren des Wasserbehälters zum Abführen der Reinigungs- bzw. Entkalkungsflüssigkeit oder auch zum Spülen der Kaffeemaschine möglich.

Die Ablasseinrichtung kann beispielsweise eine Pumpe umfassen, welche derart ausgebildet ist, dass sie Flüssigkeit aus dem Wasserbehälter abpumpen kann und geeignet ist, den Wasserbehälter zu entleeren. Eine derartige Pumpe (im Folgenden auch "Entleerungspumpe" genannt) kann beispielsweise ausgebildet sein, Flüssigkeit aus dem Wasserbehälter kontinuierlich oder intervallweise abzupumpen, beispielsweise in eine Restwasserschale, welche dazu geeignet ist, die abgepumpte Flüssigkeit aufzunehmen und zumindest für eine bestimmte Zeit zu speichern.

Die Ablasseinrichtung kann (alternativ oder zusätzlich zu einer Pumpe bzw. Entleerungspumpe) auch ein steuerbares Ventil enthalten, welches geöffnet werden kann, um eine Flüssigkeit aus dem Wasserbehälter abzulassen, beispielsweise in eine Restwasserschale. Ein derartiges Ventil kann beispielsweise in einem Auslass des Wasserbehälters zum Ablassen der Flüssigkeit, beispielsweise in einer Flüssigkeitsablaufleitung, angeordnet sein.

Vorteilhafterweise kann zusätzlich vorgehen sein, im Füllmodus eine Verbindung des Wasserzulaufs mit dem Wasseranschluss zu unterbrechen, wenn der erste Füllstand erreicht oder überschritten ist. In diesem Fall ist gewährleistet, dass stets eine ausreichende Menge an Frischwasser für den nächsten Getränkebezug zur Verfügung steht, ohne dass (gegebenenfalls sogar manuell) ein Überlaufen des als Puffertank ausgebildeten Wasserbehälters verhindert werden müsste.

In diesem Zusammenhang kann es weiterhin vorgesehen sein, dass die Steuereinrichtung dazu ausgelegt ist, im Entleerungsmodus eine Verbindung des Wasserzulaufs mit dem Wasseranschluss unabhängig von dem ersten Füllstand zu unterbrechen. Hierdurch ist dann, wenn automatisch oder manuell der Entleerungsmodus vorgewählt wurde, ein im Wesentlichen vollständiges Entleeren des Wasserspeichers, d. h. des Wasserbehälters möglich, ohne dass bei Unterschreiten eines Mindestwasserfüllstandes stets neues Frischwasser in den Wasserbehälter eingelassen würde.

Des Weiteren kann es vorgesehen sein, dass die Vorrichtung in mindestens drei verschiedenen Betriebsmodi betrieben werden kann, beispielsweise ausser in einem der bereits erwähnten Betriebsmodi "Füllmodus" und "Entleerungsmodus" noch zusätzlich in einem "Spülmodus". In diesem Fall kann vorgesehen sein, dass der "mindestens eine Betriebsmodus" beispielsweise aus den Betriebsmodi "Füllmodus", "Entleerungsmodus" und "Spülmodus" auswählbar ist, sodass der "mindestens eine Betriebsmodus" also wahlweise ein Füllmodus, ein Entleerungsmodus oder ein "Spülmodus" der Vorrichtung ist.

Durch Vorsehen eines derartigen Spülmodus ist es möglich, den Wasserbehälter gezielt bis zu einer beliebigen Höhe aufzufüllen, ohne dass bei Erreichen des ersten Füllstandes eine Trennung des Wasseranschlusses vom Wasserzulauf folgen würde. Hierdurch ist es insbesondere beim Reinigen oder Entkalken möglich, gezielt ohne zwischenzeitliches Nachfüllen eine grössere Spülwassermenge zum Durchspülen des Fluidsystems der Kaffeemaschine bereitstellen zu können. Gleichzeitig ist eine Reinigung des im Wesentlichen gesamten Innenvolumens des Wasserbehälters möglich.

In diesem Zusammenhang kann es auch vorgesehen sein, dass das Signal des mindestens einen Füllstandsensors zusätzlich angibt, ob oder ob nicht ein zweiter Füllstand von Flüssigkeit innerhalb des Wasserbehälters erreicht oder überschritten ist. Dieser zweite Füllstand bezeichnet hierbei ein grösseres Flüssigkeitsvolumen innerhalb des Wasserbehälters als der erste Füllstand. Insbesondere kann hierfür auch mindestens ein weiterer Füllstandsensor vorgesehen sein, welcher oberhalb eines ersten Füllstandsensors angeordnet ist.

Durch die zusätzliche Auswertemöglichkeit eines zweiten, höheren Füllstands kann ein Reinigungs- oder Entkalkungsvorgang in höherem Masse variiert werden, was die Reinigungs-bzw. Entkalkungsleistung verbessert.

In diesem Zusammenhang kann es vorgesehen sein, dass die Steuereinrichtung dazu ausgelegt ist, im Spülmodus den Wasserzulauf mit dem Wasseranschluss zu verbinden, wenn der zweite Füllstand nicht erreicht oder überschritten ist, und eine Verbindung des Wasserzulaufs mit dem Wasseranschluss zu unterbrechen, wenn der zweite Füllstand erreicht oder überschritten ist.

Hierdurch ist es möglich, in einem Spülmodus in automatisierter Weise ein grösseres Wasservolumen zum Spülen des Fluidsystems Gder Kaffeemaschine zur Verfügung stellen zu können, was durch die gründlichere Spülung mögliche Geschmacksbeeinträchtigungen beim nachfolgenden Getränkebezug weiter reduziert.

Alternativ oder zusätzlich kann es vorgesehen sein, dass die Steuereinrichtung dazu ausgelegt ist, auch im Füllmodus den zweiten Füllstand auszuwerten, d. h. im Füllmodus eine Verbindung des Wasserzulaufs mit dem Wasseranschluss zu unterbrechen und gegebenenfalls ein Alarmsignal auszugeben, wenn der zweite Füllstand erreicht oder überschritten ist.

Sollte infolge einer Fehlfunktion, beispielsweise eines separat vorgesehenen Füllstandsensors für den ersten Füllstand, dieser erste Füllstand im Normalbetrieb, d. h. in Füllmodus überschritten werden und der zweite Füllstand erreicht werden, so ist auf diese Weise eine Sicherheitsabschaltung des Wasserzulaufs, d. h. ein forciertes Trennen des Wasseranschlusses vom Wasserzulauf vorgesehen. Gleichzeitig kann ein Alarmsignal ausgegeben werden, beispielsweise in Form eines optischen oder akustischen Signals, wodurch der Bediener der Kaffeemaschine auf die Fehlfunktion aufmerksam gemacht wird und gegebenenfalls Abhilfe schaffen kann.

In diesem Zusammenhang kann es vorgesehen sein, dass die Steuereinrichtung ferner dazu ausgelegt ist, die Ablasseinrichtung in Abhängigkeit von dem Signal des mindestens einen Füllstandsensors und dem mindestens einen Betriebsmodus kontinuierlich oder intervallweise anzusteuern.

Hierbei ist es insbesondere möglich, im Entleerungsmodus ein intervallweises Entleeren der Entkalkungsflüssigkeit in die Fluidsysteme der Kaffeemaschine, beispielsweise also die Schlauchsysteme der Kaffeemaschine, vorzunehmen, wodurch eine längere Einwirkzeit der Reinigungs- bzw. Entkalkungsflüssigkeit in diesen Fluidsystemen möglich ist und sich infolge dessen die Reinigungsleistung weiter verbessert. Ein anschliessendes Durchspülen der Fluidsysteme in einem Spülmodus, d. h. nach einem weitestgehend vollständigen Entleeren des Wasserbehälters und einem anschliessenden Auffüllen mit Frischwasser, kann dann in einem kontinuierlichen Betrieb der Ablasseinrichtung erfolgen, so dass die Kaffeemaschine schneller wieder für einen folgenden Getränkebezug zur Verfügung steht.

Zusätzlich weisen bestimmte herkömmliche Vorrichtungen im Wasserbehälter einen vor dem Behälterauslass angeordneten Wasserfilter auf. Ein derartiger im Wasserbehälter angeordneter Wasserfilter ist in der Regel ein Wasserenthärter zum zumindest teilweisen Enthärten bzw. Deionisieren des Wassers. Durch die normalerweise zum Einsatz kommende Ionentauschertechnik erschöpft sich die Filterleistung je nach Grundkalkgehalt (Carbonathärte) des über den Wasserzulauf in den Wasserbehälter einlassbaren Frischwassers und in Abhängigkeit von der durchgelaufenen Flüssigkeitsmenge, so dass sich der wirtschaftlich sinnvolle Zeitpunkt für einen Austausch des Filters (oder eines entsprechenden Filtereinsatzes) bei herkömmlichen Vorrichtungen nur schwierig bestimmen lässt.

In diesem Zusammenhang kann es nun zusätzlich vorgesehen sein, dass der mindestens eine Füllstandssensor nicht lediglich ein Signal über ein Erreichen des Füllstandes an die Steuereinrichtung abgibt, sondern dass er zusätzlich dazu ausgelegt ist, bei einer Benetzung mit Flüssigkeit eine Behälterwasserhärte, vorzugsweise durch eine Leitfähigkeitsmessung (d.h. durch eine Messung der elektrischen Leitfähigkeit des Wassers), zu bestimmen und mittels des mindestens einen Signals an die Steuereinrichtung zu übermitteln. Die Steuereinrichtung ist hierbei ferner dazu ausgelegt, in Abhängigkeit von der Behälterwasserhärte ein Wechselintervall für einen im Wasserbehälter vorgesehenen Wasserfilter zu bestimmen und vorzugsweise bei Ablauf des bestimmten Wechselintervalls ein Filterwechselsignal auszugeben, welches einen Zeitpunkt charakterisiert, an dem der Wasserfilter oder gegebenenfalls ein Filtereinsatz des Wasserfilters vorzugsweise gewechselt werden sollte.

Durch die Messung der Wasserhärte im Wasserbehälter kann ein Wechselintervall bestimmt werden, zu welchem der Filter bzw. der Filtereinsatz für eine Aufrechterhaltung der Filterwirkung ausgetauscht werden sollte. Zu diesem Zweck können zusätzlich auch die Werte eines Durchflussmessers oder ein Zeitablauf in der Steuereinrichtung ausgewertet werden.

Hierdurch ist es in einfacher Weise möglich, zusätzlich zu den bereits genannten Vorteilen den Benutzer der Kaffeemaschine dazu zu veranlassen, einen Wasserfilterwechsel (oder den Wechsel des Filtereinsatzes) zu einem wirtschaftlich sinnvollen Zeitpunkt vorzunehmen.

In diesem Zusammenhang kann es auch vorgesehen sein, dass die Vorrichtung zusätzlich einen Wasserhärtesensor an einem Auslass des Wasserbehälters aufweist, der dazu ausgelegt ist, bei einer Benetzung mit Flüssigkeit eine "Auslasswasserhärte" (d.h. die Härte des Wassers, welches nach Durchströmen des Filters den Behälter durch den Auslass verlässt), vorzugsweise durch eine Leitfähigkeitsmessung (d.h. durch eine Messung der elektrischen Leitfähigkeit des Wassers), zu bestimmen und mittels des mindestens einen Signals an die Steuereinrichtung der Vorrichtung und oder an eine andere Steuereineinrichtung, beispielsweise an eine Steuerelektronik der Kaffeemaschine, zu übermitteln. Die Steuereinrichtung der Vorrichtung oder die Steuerelektronik der Kaffeemaschine ist in diesem Fall ferner dazu ausgelegt, die jeweils gemessene Behälterwasserhärte mit der jeweils gemessenen Auslasswasserhärte zu vergleichen; zu diesem Zweck kann beispielsweise eine Differenz zwischen der gemessenen Auslasswasserhärte und der gemessenen Behälterwasserhärte oder ein Verhältnis zwischen der gemessenen Auslasswasserhärte und der gemessenen Behälterwasserhärte bestimmt werden.

Ein derartiger Vergleich zwischen der Behälterwasserhärte und der Auslasswasserhärte bietet die Möglichkeit, ein "Vergleichswechselintervall" für den im Wasserbehälter vorgesehenen Wasserfilter zu bestimmen, beispielsweise in Abhängigkeit von einem Verhältnis zwischen der Auslasswasserhärte und der Behälterwasserhärte (im Folgenden "Wasserhärtenverhältnis") oder der Differenz zwischen der Auslasswasserhärte und der Behälterwasserhärte (im Folgenden "Wasserhärtendifferenz"), und vorzugsweise bei Ablauf des bestimmten "Vergleichswechselintervalls" das Filterwechselsignal auszugeben. In diesem Zusammenhang soll "Vergleichswechselintervall" ein Zeitintervall bezeichnen, welches auf der Grundlage eines Vergleichs zwischen der Behälterwasserhärte und der Auslasswasserhärte ermittelt wurde und dessen Ende einen Zeitpunkt charakterisiert, an dem der Wasserfilter bzw. ein Filtereinsatz des Wasserfilters vorzugsweise gewechselt werden sollte.

Aus einem derartigen Vergleich zwischen der Behälterwasserhärte und der Auslasswasserhärte (z.B. durch Bestimmen des oben genannten "Wasserhärtenverhältnis" oder der oben genannten "Wasserhärtendifferenz"), kann auf den Erschöpfungsgrad des Filters geschlossen werden. Ist diese Wasserhärtendifferenz mit zunehmender Erschöpfung des Filters bzw. der Filterwirkung auf einen vorab festgelegten oder festlegbaren Wert abgesunken oder wird diese Wasserhärtendifferenz kleiner oder gleich einem vorgegebenen Wert, gibt die Steuereinrichtung der Vorrichtung oder die Steuerelektronik der Kaffeemaschine eine Information über das ermittelte Vergleichswechselintervall oder ein Filterwechselsignal an den Benutzer aus, wodurch eine noch genauere Bestimmung des wirtschaftlich sinnvollen Zeitpunktes zum Wasserfilterwechsel (oder Wechsel des Einsatzes) möglich ist. Entsprechend kann die Steuereinrichtung der Vorrichtung oder die Steuerelektronik der Kaffeemaschine eine Information über das ermittelte Vergleichswechselintervall oder ein Filterwechselsignal an den Benutzer ausgeben, wenn das ermittelte Wasserhärtenverhältnis auf einen vorgegebenen Wert anwächst oder einen vorgegebenen Wert übersteigt.

Unter Verwendung der erfindungsgemässen Kaffeemaschine kann auch ein automatisiertes Reinigungs- bzw. Entkalkungsverfahren vorgesehen sein, welches von der Steuereinrichtung ausgeführt wird und die folgenden Schritte aufweist:
- Aktivieren des Füllmodus und Befüllen des Wasserbehälters bis zu einem ersten Füllstand;
- Zugeben von Reinigungsmittel, vorzugsweise Entkalkungsmittel, in den Wasserbehälter;
- Aktivieren des Entleerungsmodus und Entleeren des Wasserbehälters;
- Aktivieren des Spülmodus und Befüllen des Wasserbehälters bis zum zweiten Füllstand;
- Aktivieren des Entleerungsmodus und Entleeren des Wasserbehälters ;
- Aktivieren des Füllmodus und Befüllen des Wasserbehälters bis zum ersten Füllstand;
- Aktivieren des Entleerungsmodus und Entleeren, vorzugsweise intervallweises Entleeren, des Wasserbehälters, wobei der zweite Füllstand höher als der erste Füllstand ist.

Nachfolgend wird ein Ausführungsbeispiel der Erfindung anhand einer Zeichnung näher erläutert.

Es zeigen:
- Fig. 1:: in schematischer Schnittansicht eine erfindungsgemässe Vorrichtung zum Bereitstellen von Flüssigkeit gemäss einem Ausführungsbeispiel;
- Fig. 2:: den mit A gekennzeichneten Ausschnitt aus Fig. 1;
- Fig. 3:: in schematischer Schnittansicht eine erfindungsgemässe Vorrichtung zum Bereitstellen von Flüssigkeit gemäss einem weiteren Ausführungsbeispiel.

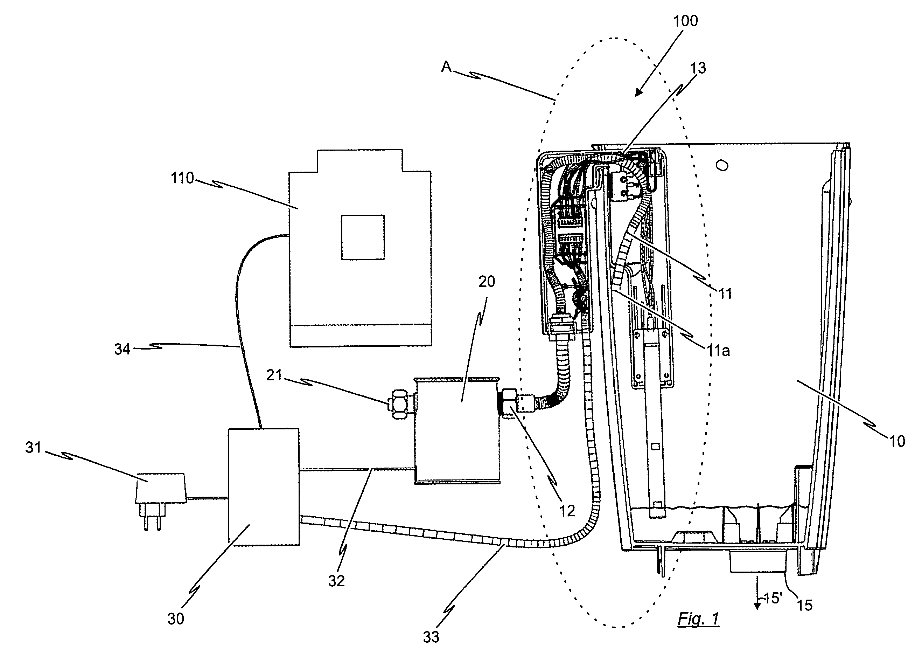

Fig. 1 zeigt in einer schematischen Schnittansicht eine erfindungsgemässe Kaffeemaschine 110 mit einer Vorrichtung 100 zum Bereitstellen von Flüssigkeit für die Kaffeemaschine 110 gemäss einer Ausführungsform der Erfindung.

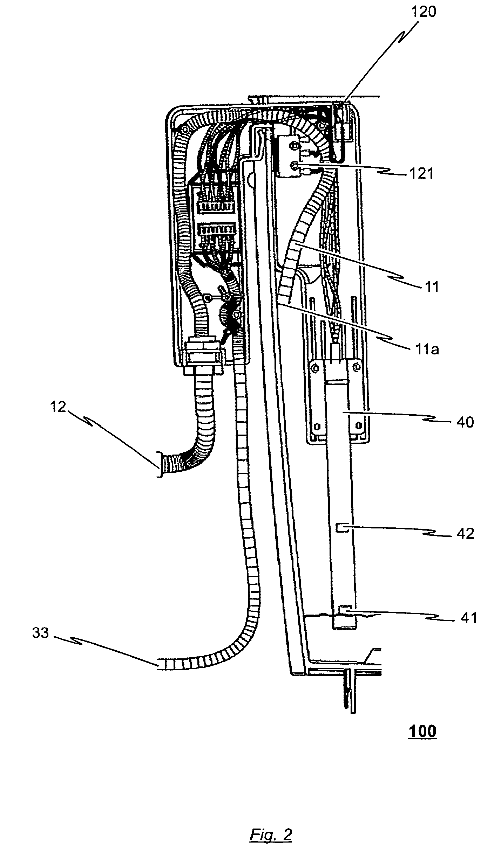

Die Vorrichtung 100 weist einen Wasserbehälter 10 auf, in welchen in Fig. 1 linksseitig gezeigt ein sogenannter Festwasserclip 13 eingehängt ist, welcher weiter unten stehend unter Bezugnahme auf Fig. 2 noch näher erläutert wird.

Ein Wasserzulauf 11 ist durch das Gehäuseinnere des Festwasserclips 13 geführt und ragt mit seiner Einlassöffnung 11a in das Innere des Wasserbehälters 10. Der Schlauch des Wasserzulaufs 11 ist aussenseitig mit einem Ventilanschluss 12 versehen, welcher seinerseits wiederum mit einer Seite eines Servomagnetventils 20 verbunden ist.

Das Servomagnetventil 20 ist ansteuerbar ausgebildet und derart ausgelegt, dass es bei Vorhandensein geeigneter Signale auf seiner Ansteuerleitung 32 eine (Fluid-) Verbindung mit einem Wasseranschluss 21, welcher beispielsweise direkt an das Trinkwassernetz angeschlossen ist, herstellen und trennen bzw. unterbrechen kann. Selbstverständlich kann das Servomagnetventil 20 auch durch ein Ventil anderer Bauart ersetzt werden.

Die Ansteuerleitung 32 ist mit einer Steuereinrichtung 30 verbunden, welche beispielsweise in Form eines Minihubs als zentrale Schnittstelle ausgebildet sein kann.

Die Steuereinrichtung 30 weist ferner eine Statusleitung 34 zu der Kaffeemaschine 110 auf, was es besonders einfach macht, an einer (normalerweise ohnehin vorhandenen) Benutzerschnittstelle der Kaffeemaschine 110 (zum Bedienen der Kaffeemaschine 110 durch einen Benutzer) eine manuelle Auswahlmöglichkeit für den Betriebsmodus vorzusehen. Ein entsprechendes Signal, welches den Betriebsmodus kennzeichnet, kann dann von der Kaffeemaschine 110 über die Statusleitung 34 an die Steuereinrichtung 30 übertragen werden.

Die Steuereinrichtung 30 ist weiterhin mit einer Signalleitung 33 verbunden, welche zumindest in Teilen durch das Gehäuse des Festwasserclips 13 zu einem ersten Füllstandsensor 41 und einem zweiten Füllstandsensor 42, die an einer Sensorlanze 40 angeordnet sind, führt und eine elektrische Signalverbindung mit den Füllstandsensoren 41, 42 herstellt. Sensorlanze 40, erster Füllstandsensor 41 sowie zweiter Füllstandsensor 42 sind in der vergrösserten Darstellung des Festwasserclips 13 in Fig. 2 zu erkennen.

Ferner werden über die Signalleitung 33 zusätzlich Informationen an die Steuereinrichtung 30 übertragen, die kennzeichnen, ob der Festwasserclip 13 ordnungsgemäss auf den Wasserbehälter 10 gesteckt wurde. Hierzu weist der Festwasserclip 13 einen Detektionsschalter 121 auf, der ein entsprechendes Signal an die Steuereinrichtung 30 übermittelt. Für den Fall, dass der Festwasserclip 13 nicht ordnungsgemäss an dem Wasserbehälter 10 montiert wurde, ist vorgesehen, dass die Steuereinrichtung 30 ein Befüllen des Wasserbehälters 10, d. h. ein Öffnen des Servomagnetventils 20, verhindert. Gleichzeitig wird ein optisches Signal an den Bediener ausgegeben, indem die Steuereinrichtung 30 über die Signalleitung 33 eine LED 120 aktiviert.

Der erste Füllstandsensor 41 ist auf einem ersten Wasserfüllstandsniveau angeordnet und gibt ein entsprechendes Signal über die Signalleitung 33 an die Steuereinrichtung 30 aus, wenn er von Flüssigkeit benetzt ist, d. h. sobald der ihm zugeordnete Füllstand innerhalb des Wasserbehälters 10 erreicht oder überschritten wird. In entsprechender Weise übermittelt der darüberliegend angeordnete zweite Füllstandsensor 42 ebenfalls ein Signal über die Signalleitung 33 an die Steuereinrichtung 30, sobald ein zweiter Füllstand, d. h. ein höherer Füllstand innerhalb des Wasserbehälters 10 erreicht oder überschritten wird.

Die Sensorlanze 40 ist mittels einer geeigneten Verstelleinrichtung höhenverstellbar angeordnet und erlaubt somit in gewissen Grenzen eine Justage der Füllstände des ersten Füllstandsensors 41 und des zweiten Füllstandsensors 42. Während eines Produktbezuges sowie im laufenden Betrieb der Kaffeemaschine, d. h. in einem Füllmodus der Kaffeemaschine, steuert die Steuereinrichtung 30 das Servomagnetventil 20 derart an, dass stets ein intervallmässiges Nachfüllen auf das Wasserniveau, welches der erste Füllstandsensor 41 angibt - den sogenannten Operationspunkt - erfolgt. Sinkt der Wasserstand im Wasserbehälter 10 unter diesen ersten Füllstand, so übermittelt der erste Füllstandsensor 41 über die Signalleitung 33 an die Steuereinrichtung 30 ein derartiges Absinken des Wasserstandes, woraufhin die Steuereinrichtung 30 das Servomagnetventil 20 öffnet und somit eine Verbindung zwischen dem Wasserzulauf 11 und dem Wasseranschluss 21 herstellt, bis der Sensor bei Erreichen des ersten Füllstandes wieder ein entsprechendes Signal liefert, woraufhin das Servomagnetventil 20 wieder geschlossen wird.

Beide Füllstandsensoren 41, 42 sind hierbei nicht auf ein bestimmtes Messverfahren beschränkt; gleichwohl wird vorzugsweise der Widerstand zwischen zwei elektrisch leitenden Messflächen, die bündig an dem runden Messstab der Sensorlanze 40 angeordnet sind, gemessen, wobei der Signalsprung von der Leitfähigkeit des Wassers und der Luft von der Elektronik der Steuereinrichtung 30 bzw. einer in die Füllstandsensoren 41, 42 integrierten Elektronik ausgewertet wird. Besonderer Vorteil hier ist, dass diese Sensorvariante leicht mit herkömmlichen Reinigungsmitteln von allfälligen Kalkrückständen gereinigt werden kann.

Je nach Betriebsmodus erfolgt nun eine Ansteuerung durch die Steuereinrichtung 30 dahingehend, dass entweder ein Befüllen des Wasserbehälters 10 bis Erreichen des ersten Füllstandes beim ersten Füllstandsensor 41, bis Erreichen des zweiten Füllstandes beim zweiten Füllstandsensor 42 oder aber gar kein Nachfüllen vorgenommen wird.

Wie in Fig. 1 dargestellt ist, weist der Behälter 10 einen Auslass 15 aus, durch welchen (Frisch-) Wasser oder eine andere Flüssigkeit aus dem Wasserbehälter 10 abgegeben werden kann. Ein Pfeil 15' in Fig. 1 deutet dabei die Flussrichtung einer durch den Auslass 15 fliessenden Flüssigkeit an.

Zum Zwecke der kontrollierten Entleerung des Wasserbehälters 10 kann die Vorrichtung 100 gemäss der in den Figuren 1 und 2 dargestellten Ausführungsform der Erfindung mit einer in den Figuren 1 und 2 nicht dargestellten Ablasseinrichtung zum Ablassen von Flüssigkeit aus dem Wasserbehälter ausgestattet sein, wobei die Ablasseinrichtung ansteuerbar ist, um die jeweilige Flüssigkeit zumindest während eines bestimmten Zeitraums kontinuierlich oder intervallweise aus dem Wasserbehälter 10 abzulassen.

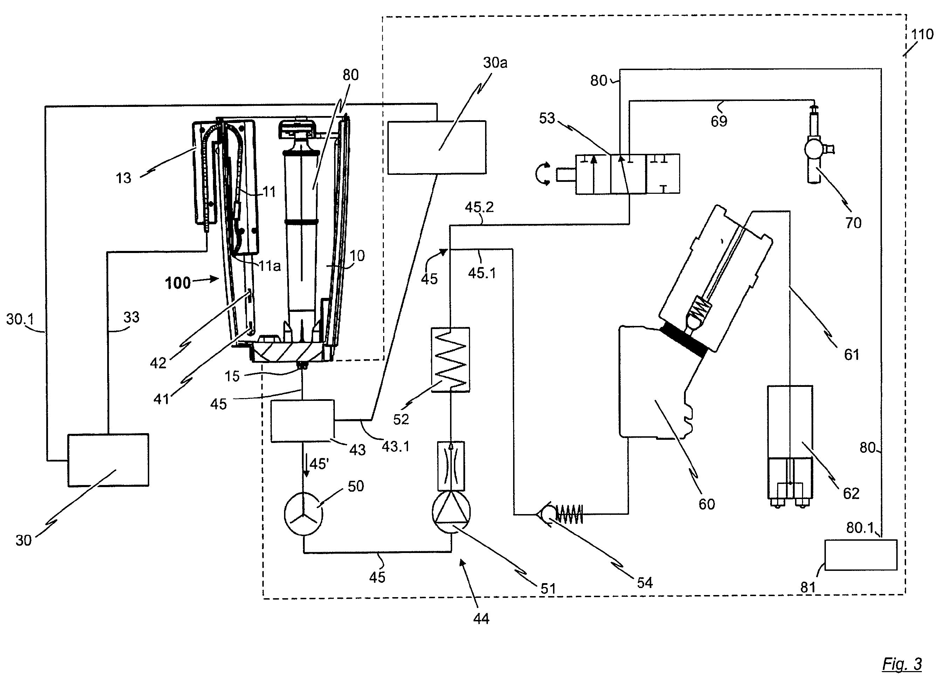

Eine derartige Ablasseinrichtung kann beispielsweise eine Entleerungspumpe umfassen, welche derart ansteuerbar ist, dass sie kontinuierlich oder intervallweise Flüssigkeit aus dem Wasserbehälter abpumpen kann, beispielsweise in eine (in Fig. 1 und 2 nicht dargestellte) Restwasserschale, wobei dieses Abpumpen beispielsweise durch den Auslass 15 erfolgen kann (oder alternativ auf einem anderen Weg). Zu diesem Zweck kann die Entleerungspumpe beispielsweise ein Bestandteil der Vorrichtung 100 sein oder an der Vorrichtung 100 angeordnet sein und beispielsweise durch die Steuereinrichtung 30 angesteuert werden. Alternativ kann als eine derartige Entleerungspumpe auch eine Pumpe dienen, welche in die Kaffeemaschine 110 integriert ist und dafür bestimmt ist, Wasser oder eine andere Flüssigkeit in einem (in Fig. 1 und 2 nicht dargestellten, aber in Fig. 3 dargestellten und im Zusammenhang mit Fig. 3 beschriebenen) Fluidsystem der Kaffeemaschine 110 (zur Versorgung der Kaffeemaschine 110 mit Wasser) zu transportieren. Diese Pumpe der Kaffeemaschine 110 kann dementsprechend von einer (in Fig. 3 dargestellten) Steuerelektronik 30a der Kaffeemaschine 110 gesteuert werden und so mit dem Behälter 10 verbunden werden, dass mit dieser Pumpe Wasser oder eine andere Flüssigkeit aus dem Behälter 10 abgepumpt werden kann, beispielsweise in einen (in den Fig. 1-2 nicht gezeigten) Wasserablauf, beispielsweise in eine Restwasserschale der Kaffeemaschine 110. Hierbei kann es zusätzlich auch vorgesehen sein, dass eine derartige Entleerungspumpe mit einem Durchflussmesser 50 (Fig. 3) in der Kaffeemaschine 110 verbunden ist, so dass zusätzlich eine Überwachung dahingehend möglich ist, zu welchem Zeitpunkt der Wasserbehälter 10 im Wesentlichen vollständig entleert wurde.

Durch den Aufbau gemäss der dargestellten Ausführungsform ist beispielsweise ein weitgehend automatisiertes Entkalken des Wasserbehälters 10 möglich. Hierzu ist es lediglich erforderlich, in das in dem Wasserbehälter 10 vorhandene Wasser eine definierte Menge Entkalkungsmittelkonzentrat einzufüllen und beispielsweise nach einer Tastenbetätigung an der Kaffeemaschine 110 den Betriebsmodus der Vorrichtung 100 zu wechseln und einen automatisch ablaufenden Entkalkungsvorgang zu starten.

Während dieses Entkalkungsvorgangs wird die Zugabe von Frischwasser gezielt unterbunden, indem das Servomagnetventil 20 durch die Steuereinrichtung 30 stets so angesteuert wird, dass keine Verbindung zwischen dem Wasserzulauf 11 und dem Wasseranschluss 21 besteht. Nachdem die Entleerungspumpe den Wasserbehälter 10 im Wesentlichen vollständig geleert hat, wird die Frischwasserzugabe bis zu einer Wasserhöhe freigegeben, welche der Anordnung des zweiten Füllstandsensors 42 entspricht. Diese Wassermenge wird zuerst mittels der Entleerungspumpe in ein entsprechendes Abflusssystem, beispielsweise eine Restwasserschale geleitet, wodurch der Wasserbehälter gespült wird. Danach wird die Frischwasserzugabe bis zur Wasserhöhe freigegeben, welche der Anordnung des ersten Füllstandsensors 41 entspricht. Mit diesem Frischwasser wird dann das komplette Fluidsystem der Kaffeemaschine ausgespült.

Selbstverständlich ist es möglich, die komplette Vorrichtung 100 zum Bereitstellen von Flüssigkeit oder auch nur Teile davon, wie beispielsweise den Wasserbehälter 10, in die Kaffeemaschine 110 zu integrieren und somit eine Kaffeemaschine 110 bereitzustellen, bei welcher nur der Wasseranschluss 21 der Vorrichtung 100 und gegebenenfalls eine separate Spannungsversorgung 31 nach aussen geführt sind.

Fig. 3 zeigt in schematischer Schnittansicht eine erfindungsgemässe Kaffeemaschine mit einer Vorrichtung zum Bereitstellen von Flüssigkeit gemäss einem weiteren Ausführungsbeispiel. Das Ausführungsbeispiel gemäss Fig. 3 umfasst u.a. die Vorrichtung 100 gemäss Fig. 1 und 2 mit einem Wasserbehälter 10 und ist in Kombination mit einer Kaffeemaschine 110 gemäss Fig. 1 dargestellt.

Es ist anzumerken, dass ein in Fig. 1 und 2 dargestellter Wasserzulauf zum Zuführen von Wasser in den Behälter 10 (über einen Wasseranschluss 21 und ein ansteuerbar ausgebildetes Servomagnetventil 20) zwar in Fig. 3 nicht explizit dargestellt ist, im Falle des Ausführungsbeispiels gemäss Fig. 3 aber ein entsprechender Wasserzulauf zum Zuführen von Wasser in den Wasserbehälter 10 jedoch vorhanden ist und im Wesentlichen (hinsichtlich seiner Funktion und seiner Konstruktion) analog zu dem in Fig. 1 dargestellten Wasserzulauf ausgebildet ist. Dementsprechend ist gemäss Fig. 3 in den Wasserbehälter 10 der Vorrichtung 100 ein Festwasserclip 13 eingehängt, welcher dem Festwasserclip 13 gemäss Fig. 2 entspricht.

Wie in Fig. 3 dargestellt ist, weist der Behälter 10 einen Auslass 15 aus, durch welchen (Frisch-) Wasser oder eine andere Flüssigkeit aus dem Behälter 10 abgegeben werden kann, wobei im Behälter 10 am Auslass 15 ein Filter 80 platziert ist, durch welchen das im Behälter 10 befindliche Wasser bzw. die jeweilige Flüssigkeit jeweils fliessen muss, um zum Auslass 15 zu gelangen. Im dargestellten Ausführungsbeispiel weist er Filter 80 einen Filtereinsatz in Form eines Ionentauschers auf, welcher dazu ausgebildet ist, zumindest einen Teil des durch den Filter 80 fliessenden Wassers bzw. der durch den Filter 80 fliessenden Flüssigkeit zu deionisieren und auf diese Weise zu entkalken.

Wie Fig. 3 andeutet, umfasst die Kaffeemaschine 110 eine Wasserleitung 45, welche an einem Ende an den Auslass 15 angeschlossen ist, sodass Wasser oder eine andere Flüssigkeit aus dem Behälter 10 in die Wasserleitung 45 fliessen und durch die Wasserleitung 45 in der Kaffeemaschine 110 verteilt werden kann. In die Wasserleitung 45 sind - in der Flussrichtung 45' des Wassers bzw. der jeweiligen Flüssigkeit seriell hintereinander angeordnet - eine Pumpe 51 zum Transportieren des Wassers in der Wasserleitung 45 in der Flussrichtung 45' und ein Durchlauferhitzer 52 integriert. Der Durchlauferhitzer 52 ist dazu ausgelegt, das mittels der Pumpe 51 zum Durchlauferhitzer 52 transportierte Wasser zu erhitzen, wobei der Durchlauferhitzer 52 das Wasser auf verschiedene Temperaturen erhitzen kann, sodass der Durchlauferhitzer 52 wahlweise Heisswasser oder Wasserdampf in der Wasserleitung 45 erzeugt. Wie Fig. 3 weiterhin andeutet, ist die Wasserleitung 45 - bezogen auf die Flussrichtung 45' des Wassers - hinter dem Durchlauferhitzer 52 verzweigt in einen ersten Zweig 45.1 der Wasserleitung 45 und einen zweiten Zweig 45.2 der Wasserleitung 45, wobei der erste Zweig 45.1 der Wasserleitung 45 dazu dient, im Durchlauferhitzer 52 erzeugtes Heisswasser über ein Rückschlagventil 54 einer Brüheinheit 60 zum Brühen von Kaffee zuführen, und der zweite Zweig 45.2 der Wasserleitung 45 dazu dient, über ein Stellventil 53 entweder im Durchlauferhitzer 52 erzeugten Wasserdampf über eine Dampfleitung 69 einer Dampfdüse 70 zuzuführen oder eine Flüssigkeit aus dem Behälter 10 einer Flüssigkeitsablaufleitung 80 zuzuführen, welche es ermöglicht, die jeweils der Flüssigkeitsablaufleitung 80 zugeführte Flüssigkeit (beispielweise Wasser oder ein Reinigungs- oder Entkalkungsmittel) über einen Ausgang 80.1 der Flüssigkeitsablaufleitung 80 ablaufen zu lassen, beispielsweise in eine Restwasserschale 81.

Wie Fig. 3 andeutet, weist das Stellventil 53 drei verschiedene Stellungen auf und ist mit dem zweiten Zweig 45.2 der Wasserleitung 45, der Dampfleitung 69 und der Flüssigkeitsablaufleitung 80 derart verbunden, dass in einer ersten Stellung des Stellventils 53 der zweite Zweig 45.2 der Wasserleitung 45 mit der Dampfleitung 69 und der Dampfdüse 70 in Fluidverbindung steht und in einer zweiten Stellung des Stellventils 53 (wie in Fig. 3 dargestellt) der zweite Zweig 45.2 der Wasserleitung 45 mit der Flüssigkeitsablaufleitung 80 bzw. der Restwasserschale 81 in Fluidverbindung steht, während in der dritten Stellung des Stellventils 53 der zweite Zweig 45.2 der Wasserleitung 45 derart abgeschlossen ist, dass weder eine Fluidverbindung zwischen dem zweiten Zweig 45.2 der Wasserleitung 45 und der Dampfleitung 69 noch eine Fluidverbindung zwischen dem zweiten Zweig 45.2 der Wasserleitung 45 und der Flüssigkeitsablaufleitung 80 bzw. der Restwasserschale 81 besteht. Das Stellventil 53 ist im vorliegenden Beispiel derart ausgebildet, dass es mittels einer Steuerungselektronik derart ansteuerbar ist, dass jede der drei vorstehend genannten Stellungen annehmen kann.

Wie aus Fig. 3 weiterhin ersichtlich, umfasst die Kaffeemaschine 110 eine Steuerelektronik 30a zur Steuerung eines Betriebs der Kaffeemaschine 110. Dabei ist die Steuerelektronik 30a beispielsweise dazu ausgebildet, durch eine entsprechende Ansteuerung der Pumpe 51, des Durchlauferhitzers 52, des Stellventils 53 und der Brüheinheit 60 zu veranlassen, dass Heisswasser der Brüheinheit 60 zugeführt wird, sodass die Brüheinheit 60 ein Kaffeegetränk brühen und dieses Kaffeegetränk über eine Kaffeeausgabeleitung 61 einem Kaffeeauslass 62 zur Abgabe des Kaffeegetränks zuführen kann.

Die Steuerelektronik 30a ist auch dazu ausgebildet, durch eine entsprechende Ansteuerung der Pumpe 51, des Durchlauferhitzers 52 und des Stellventils 53 zu veranlassen, dass eine Portion Wasserdampf der Dampfdüse 70 zugeführt wird, wobei die Dampfdüse 70 beispielsweise dazu ausgebildet sein kann, den Wasserdampf aus einer Austrittsöffnung austreten zu lassen, oder dazu dienen kann, Milch zu erhitzen oder Milchschaum zu erzeugen.

Weiterhin ist die Steuerelektronik 30a auch dazu ausgebildet, durch eine entsprechende Ansteuerung der Pumpe 51, des Durchlauferhitzers 52 und des Stellventils 53 zu veranlassen, dass eine Flüssigkeit aus dem Behälter 10 abgepumpt werden kann und über die Flüssigkeitsablaufleitung 80 ablaufen kann, beispielsweise über den Ausgang 80.1 in die Restwasserschale 81. Zu diesem Zweck kann das Stellventil 53 in die in Fig. 3 dargestellte Stellung gebracht werden, sodass eine Fluidverbindung zwischen dem zweiten Zweig 45.2 der Wasserleitung 45 und der Flüssigkeitsablaufleitung 80 besteht. Anschliessend kann mittels der Pumpe 51 Flüssigkeit aus dem Behälter 10 über den Auslass 15, die Wasserleitung 45, das Stellventil 53 und die Flüssigkeitsablaufleitung 80 abgepumpt werden, sodass sich die dabei abgepumpte Flüssigkeit in der Restwasserschale 81 sammeln kann.

Im vorliegenden Beispiel kann die Steuerelektronik 30a der Kaffeemaschine 110 die Vorrichtung 100 derart ansteuern, dass die Vorrichtung 100 in einem Entleerungsmodus betrieben wird, in welchem der Behälter 10 ganz oder teilweise entleert werden kann. Im Entleerungsmodus steuert die Steuereinrichtung 30 den Wasserzulauf 11 derart, dass eine Verbindung des Wasserzulaufs 11 mit dem Wasseranschluss 21 (Fig. 1) unterbrochen ist, und zwar unabhängig von dem Füllstand des Behälters 10, d.h. unabhängig von Signalen der Füllstandssensoren 40 und 41. Dies bewirkt, dass kein frisches Wasser über den Wasserzulauf 11 in den Behälter 10 fliessen kann. Wird anschliessend, wie vorstehend beschrieben, mittels der Pumpe 51 Flüssigkeit aus dem Behälter 10 über den Auslass 15, die Wasserleitung 10, das Stellventil 53 und die Flüssigkeitsablaufleitung 80 abgepumpt, so kann der Wasserbehälter ganz oder teilweise entleert werden, ohne dass frisches Wasser über den Wasserzulauf 11 in den Behälter 10 fliessen kann. Durch das Abpumpen von Flüssigkeit wird Flüssigkeit aus dem Behälter 10 abgelassen und der Füllstand des Behälters 10 kann auf diese Weise auf eine beliebige Höhe abgesenkt werden. Bei Bedarf kann der Behälter 10 vollständig entleert werden.

Anschliessend kann der Behälter 10 beispielsweise mit Reinigungsmittel gefüllt werden, um den Behälter 10 zu reinigen (wie bereits im Zusammenhang mit Fig. 1 und 2 beschrieben).

Diejenigen Komponenten der in Fig. 3 dargestellten Vorrichtung, welche ein Ablassen von Flüssigkeit aus dem Behälter 10 ermöglichen, bilden eine "Ablasseinrichtung" im Sinne der Erfindung, auf welche in Fig. 3 mit dem Bezugszeichen 44 verwiesen wird. Die Ablasseinrichtung 44 gemäss Fig. 3 umfasst zumindest die Pumpe 51. Weiterhin können die Wasserleitung 45 und Flüssigkeitsablaufleitung 80 Bestandteile der Ablasseinrichtung 44 sein.

Der erste Füllstandssensor 41 des Festwasserclips 13 ist gemäß diesem Ausführungsbeispiel zusätzlich dazu ausgelegt, bei Benetzung eine Information über den Wasserhärtegrad des im Behälter 10 befindlichen Wassers (im Folgenden "Behälterwasserhärte") zu ermitteln und an die Steuereinrichtung 30 zu übermitteln (beispielsweise über eine in Fig.3 dargestellte Signalleitung 33). Selbstverständlich ist es auch möglich, zusätzlich oder alternativ den zweiten Füllstandssensor 42 entsprechend auszulegen, so dass dieser ebenfalls eine Information über den Wasserhärtegrad des im Behälter 10 befindlichen Wassers (Behälterwasserhärte) ermitteln und an die Steuereinrichtung 30 übermitteln kann (beispielsweise über die in Fig.3 dargestellte Signalleitung 33).

Wie aus Fig. 3 ersichtlich, ist die Steuereinrichtung 30 der Vorrichtung 100 über eine Signalleitung 30.1 mit der Steuerelektronik 30a der Kaffeemaschine 110 verbunden, sodass über die Signalleitung 30.1 Signale bzw. Daten zwischen der Steuereinrichtung 30 und der Steuerelektronik 30a übertragbar sind. Die Steuerelektronik 30a ist beispielsweise dazu ausgebildet, Messwerte für die vom ersten Füllstandssensor 41 ermittelte Behälterwasserhärte und/oder für die vom zweiten Füllstandssensor 42 ermittelte Behälterwasserhärte an die Steuereinrichtung 30a der Kaffeemaschine 110 zu übermitteln.

Wie Fig. 3 andeutet, ist in der Wasserleitung 45 der Kaffeemaschine 110 in der Nähe des Auslasses 15 des Behälters 10 zusätzlich ein Wasserhärtesensor 43 platziert, welcher eine Information über den Wasserhärtegrad des am Auslass 15 ausgegebenen Wassers (im Folgenden "Auslasswasserhärte") über eine Signalleitung 43.1 an die Steuereinrichtung 30a ausgibt. Bei entsprechend hoher Behälterwasserhärte sollte dieses ausgegebene Wasser durch das Passieren des Filters 80 eine geringere Wasserhärte als das Wasser im Behälter 10 aufweisen.

Die Steuerelektronik 30a der Kaffeemaschine 110 ist nunmehr zusätzlich dazu ausgelegt, diese Informationen der Sensoren 41, 42, 43 über die Wasserhärten zu vergleichen und bei Unterschreiten einer gewissen (vorgegebenen) Differenz zwischen Auslasswasserhärte und Behälterwasserhärte ein Signal an einen Benutzer auszugeben, beispielsweise mittels einer nicht dargestellten LED oder mittels eines Bildschirms oder einer anderen Anzeige, um dem Benutzer anzuzeigen, dass der Filter 80 das durch den Filter 80 fliessende Wasser unzureichend deionisiert bzw. entkalkt und (hinsichtlich des Entkalkens) keine akzeptable Filterwirkung erzielt, sodass der Filter 80 durch einen anderen Filter ersetzt werden sollte, welcher gewährleistet, dass das Wasser vor dem Eintritt in die Wasserleitung 45 der Kaffeemaschine 110 allenfalls einen Kalkgehalt aufweist, welcher einen vorgegebenen (maximalen) Wert unterschreitet.

In Fig. 3 sind die Vorrichtung 100 und die Kaffeemaschine 110 als separate Einheiten dargestellt. Es sei darauf hingewiesen, dass die Vorrichtung 100 auch ein integraler Bestandteil der Kaffeemaschine 110 sein kann. In Fig. 3 ist die Steuereinrichtung 30 der Vorrichtung 100 als eine separate, von der Steuerelektronik 30a der Kaffeemaschine 110 räumlich getrennte Einheit dargestellt. Es sei darauf hingewiesen, dass die Steuereinrichtung 30 auch als integraler Bestandteil der Steuerelektronik 30a realisiert sein kann. In diesem Fall wären der erste Füllstandssensor 41 und der zweite Füllstandssensor 42 über die Signalleitung 33 direkt mit der Steuerelektronik 30a der Kaffeemaschine 110 verbunden. Dementsprechend können alle Funktionen zur Steuerung der Vorrichtung 100, welche in der obigen Darstellung der Steuereinrichtung 30 zugeordnet sind bzw. mittels der Steuereinrichtung 30 realisierbar sind, in der Steuerelektronik 30a der Kaffeemaschine 110 implementiert sein bzw. mittels der Steuerelektronik 30a der Kaffeemaschine 110 realisierbar sein.

## Patentansprüche

1. Kaffeemaschine (110) mit einer Vorrichtung (100) zum Bereitstellen von Flüssigkeit für die Kaffeemaschine (110),
wobei die Vorrichtung (100) aufweist:
- einen Wasserbehälter (10) mit mindestens einem Wasserzulauf (11) zum Füllen des Wasserbehälters (10), welcher Wasserzulauf (11) mit einem Wasseranschluss (21), insbesondere mit einem Überdruck-Wasseranschluss und vorzugsweise mit einem Trinkwassernetz, ansteuerbar verbindbar ist, und mit einem Auslass (15) zum Auslassen einer Flüssigkeit aus dem Wasserbehälter (10);
- eine Steuereinrichtung (30, 30a) zum Ansteuern des ansteuerbar verbindbaren Wasserzulaufs (11); und
- mindestens einen Füllstandsensor (41, 42) zum Erzeugen eines Signals, welches mindestens angibt, ob oder ob nicht ein erster Füllstand von Flüssigkeit innerhalb des Wasserbehälters (10) erreicht oder überschritten ist,
und wobei die Kaffeemaschine (110) ausserdem aufweist:
- eine Wasserleitung (45), welche an den Auslass (15) des Wasserbehälters (10) derart angeschlossen ist, dass eine durch den Auslass (15) aus dem Wasserbehälter (10) ausgelassene Flüssigkeit durch die Wasserleitung (45) abfliessen kann,
- einen Durchlauferhitzer (52) und
- eine Brüheinheit (60) zum Brühen von Kaffee, welche über die Wasserleitung (45) und den Durchlauferhitzer (52) derart mit dem Wasserbehälter (10) verbunden ist, dass Wasser aus dem Wasserbehälter (10) der Brüheinheit (60) durch die Wasserleitung (45) und den Durchlauferhitzer (52) zuführbar ist, um ein Brühen von Kaffee zu ermöglichen,
wobei der mindestens eine Füllstandsensor (41, 42) zum Übermitteln des Signals mit der Steuereinrichtung (30, 30a) verbindbar oder verbunden ist, und wobei die Steuereinrichtung (30, 30a) dazu ausgelegt ist, den Wasserzulauf (11) in Abhängigkeit von dem Signal des mindestens einen Füllstandsensors (41, 42) und mindestens einem Betriebsmodus anzusteuern,
wobei der Betriebsmodus wahlweise ein Füllmodus oder ein Entleerungsmodus ist,
wobei die Vorrichtung ferner eine ansteuerbare Ablasseinrichtung (44) zum Ablassen von Flüssigkeit aus dem Wasserbehälter (10) durch den Auslass (15) aufweist,
wobei die Steuereinrichtung (30, 30a) weiterhin dazu ausgelegt ist, im Füllmodus den Wasserzulauf (11) mit dem Wasseranschluss (21) zu verbinden, wenn der erste Füllstand nicht erreicht und nicht überschritten ist, und im Entleerungsmodus eine Verbindung des Wasserzulaufs (11) mit dem Wasseranschluss (21) unabhängig von dem ersten Füllstand zu unterbrechen, und
wobei die Steuereinrichtung (30, 30a) dazu ausgelegt ist, die Ablasseinrichtung (44) durch Ansteuern der Ablasseinrichtung (44) zum Ablassen von Flüssigkeit aus dem Wasserbehälter (10) zu veranlassen,
**dadurch gekennzeichnet, dass**
die Steuereinrichtung (30, 30a) dazu ausgelegt ist, im Entleerungsmodus eine Verbindung des Wasserzulaufs (11) mit dem Wasseranschluss (21) zu unterbrechen und die Ablasseinrichtung (44) zu veranlassen, eine im Wasserbehälter (10) enthaltene Menge Flüssigkeit vollständig durch den Auslass (15) abzulassen und durch die Wasserleitung (45) und den Durchlauferhitzer (52) abfliessen zu lassen, sodass ein vollständiges Entleeren des Wasserbehälters (10) erfolgt.

2. Kaffeemaschine (110) nach Anspruch 1, wobei die Ablasseinrichtung (44) eine Pumpe (51) umfasst, welche derart ausgebildet ist, dass sie Flüssigkeit aus dem Wasserbehälter (10) kontinuierlich oder intervallweise abpumpen kann.

3. Kaffeemaschine (110) nach Anspruch 1 oder 2, wobei die Steuereinrichtung (30, 30a) weiterhin dazu ausgelegt ist, im Füllmodus eine Verbindung des Wasserzulaufs (11) mit dem Wasseranschluss (21) zu unterbrechen, wenn der erste Füllstand erreicht oder überschritten ist.

4. Kaffeemaschine (110) nach einem der vorhergehenden Ansprüche, wobei der mindestens eine Betriebsmodus wahlweise ein Füllmodus, ein Entleerungsmodus oder ein Spülmodus ist.

5. Kaffeemaschine (110) nach einem der vorhergehenden Ansprüche, wobei das Signal des mindestens einen Füllstandsensors (41, 42) zusätzlich angibt, ob oder ob nicht ein zweiter Füllstand von Flüssigkeit innerhalb des Wasserbehälters (10) erreicht oder überschritten ist, wobei der zweite Füllstand ein grösseres Volumen bezeichnet als der erste Füllstand.

6. Kaffeemaschine (110) nach Anspruch 5, wobei die Steuereinrichtung (30, 30a) dazu ausgelegt ist, im Spülmodus den Wasserzulauf (11) mit dem Wasseranschluss (21) zu verbinden, wenn der zweite Füllstand nicht erreicht und nicht überschritten ist, und wobei die Steuereinrichtung (30, 30a) weiterhin dazu ausgelegt ist, im Spülmodus eine Verbindung des Wasserzulaufs (11) mit dem Wasseranschluss (21) zu unterbrechen, wenn der zweite Füllstand erreicht oder überschritten ist.

7. Kaffeemaschine (110)nach Anspruch 5 oder 6, wobei die Steuereinrichtung (30, 30a) dazu ausgelegt ist, im Füllmodus eine Verbindung des Wasserzulaufs (11) mit dem Wasseranschluss (21) zu unterbrechen und ein Alarmsignal auszugeben, wenn der zweite Füllstand erreicht oder überschritten ist.

8. Kaffeemaschine (110)nach einem der vorhergehenden Ansprüche, wobei die Steuereinrichtung (30, 30a) ferner dazu ausgelegt ist, die Ablasseinrichtung in Abhängigkeit von dem Signal des mindestens einen Füllstandsensor (41, 42) und dem mindestens einen Betriebsmodus kontinuierlich oder intervallweise anzusteuern.

9. Kaffeemaschine (110)nach einem der Ansprüche 1-8, mit einem von der Steuereinrichtung (30, 30a) ansteuerbaren Ventil (20), welches dazu ausgebildet ist, eine Fluidverbindung zwischen dem Wasserzulauf (11) und dem Wasseranschluss (21) herzustellen und/oder eine Fluidverbindung zwischen dem Wasserzulauf (11) und dem Wasseranschluss (21) zu trennen.

10. Kaffeemaschine (110) nach einem der vorhergehenden Ansprüche, wobei der mindestens eine Füllstandssensor (41, 42) zusätzlich dazu ausgelegt ist, bei einer Benetzung mit Flüssigkeit im Wasserbehälter eine Behälterwasserhärte zu bestimmen und eine Information über die Behälterwasserhärte mittels des einen Signals an die Steuereinrichtung (30, 30a) zu übermitteln,
mit einem Auslass (15) zum Auslassen einer Flüssigkeit aus dem Wasserbehälter (10) und mit einem Filter (80) zum Deionisieren oder Entkalken einer aus dem Wasserbehälter (10) durch den Auslass (15) ausgelassenen Flüssigkeit.

11. Kaffeemaschine (110)nach Anspruch 10, mit einem zusätzlichen Wasserhärtesensor (43), welcher am Auslass (15) angeordnet ist und dazu ausgelegt ist, bei einer Benetzung mit der durch den Auslass (15) ausgelassenen Flüssigkeit eine Auslasswasserhärte zu bestimmen.

12. Kaffeemaschine (110)nach Anspruch 11, mit einer Steuerelektronik (30a),
wobei der zusätzliche Wasserhärtesensor (43) dazu ausgebildet ist, eine Information über die Auslasswasserhärte mittels eines Signals an die Steuerelektronik (30a) zu übertragen,
wobei die Steuerelektronik (30a) dazu ausgebildet ist, die Information über die Auslasswasserhärte mit der Information über die Behälterwasserhärte zu vergleichen und ein Signal bereitzustellen, falls die Differenz zwischen der Behälterwasserhärte und der Auslasswasserhärte kleiner oder gleich einem vorgegebenen Wert ist.

13. Kaffeemaschine (110) nach Anspruch 12,
wobei die Steuerelektronik (30a) zum Steuern eines Betriebs der Kaffeemaschine (110) ausgebildet ist und die Steuereinrichtung (30) integraler Bestandteil der Steuerelektronik (30a) ist.

14. Verfahren zum Reinigen des Wasserbehälters (10) einer Kaffeemaschine (110) nach einem der vorhergehenden Ansprüche, wobei das Verfahren die folgenden Verfahrensschritte aufweist:
- Aktivieren des Füllmodus und Befüllen des Wasserbehälters (10) bis zu einem ersten Füllstand;
- Zugeben von Reinigungsmittel, vorzugsweise Entkalkungsmittel, in den Wasserbehälter (10);
- Aktivieren des Entleerungsmodus und Entleeren des Wasserbehälters (10);
- Aktivieren des Spülmodus und Befüllen des Wasserbehälters (10) bis zum zweiten Füllstand;
- Aktivieren des Entleerungsmodus und Entleeren des Wasserbehälters (10);
- Aktivieren des Füllmodus und Befüllen des Wasserbehälters (10) bis zum ersten Füllstand;
- Aktivieren des Entleerungsmodus und Entleeren, vorzugsweise intervallweises Entleeren, des Wasserbehälters (10),
wobei der zweite Füllstand höher als der erste Füllstand ist.

## Claims

1. A coffee machine (110) comprising a device (100) for providing liquid for the coffee machine (110), wherein the device (100) encompasses:
- a water tank (10) having at least one water inlet (11) for filling the water tank (10), said water inlet (11) being configured to be connected in a controllable manner to a water connection (21), in particular to an overpressure water connection and preferably to a potable water supply, and having an outlet (15) for letting a liquid out of the water tank (10);
- a control device (30, 30a) for controlling the water inlet (11) being configured to be connected in a controllable manner; and
- at least one filling level sensor (41, 42) for generating a signal, which indicates at least whether or not a first filling level of liquid inside the water tank (10) has been reached or exceeded,
and wherein the coffee machine (110) furthermore encompasses:
- a water line (45), which is connected to the outlet (15) of the water tank (10) in such a manner that a liquid, which is let out of the tank (10) through the outlet (15), is enabled to drain through the water line (45),
- a continuous-flow heater (52) and
- a brewing unit (60) for brewing coffee, which is connected to the water tank (10) via the water line (45) and the continuous-flow heater (52) in such a manner that water from the water tank (10) is enabled to be supplied to the brewing unit (60) through the water line (45) and the continuous-flow heater (52), so as to make it possible to brew coffee,
wherein the at least one filling level sensor (41, 42) is configured to be connected or is connected to the control device (30, 30a) to transmit the signal, and wherein the control device (30, 30a) is designed to control the water inlet (11) according to the signal of the at least one filling level sensor (41, 42) and according to at least one operating mode,
wherein the operating mode is either a filling mode or an emptying mode,
wherein the device furthermore encompasses a controllable drainage device (44) for draining liquid from the water tank (10) through the outlet (15),
wherein, in the filling mode, the control device (30, 30a) is furthermore designed to connect the water inlet (11) to the water connection (21) when the first filling level has not been reached and has not been exceeded, and in the emptying mode, to interrupt a connection of the water inlet (11) to the water connection (21) independent from the first filling level, and
wherein the control device (30, 30a) is designed to prompt the drainage device (44) to drain liquid from the water tank (10) by controlling the drainage device (44),
**characterized in that**
in the emptying mode, the control device (30, 30a) is designed to interrupt a connection of the water inlet (11) to the water connection (21) and to prompt the drainage device (44) to completely drain a quantity of liquid contained in the tank (10) through the outlet (15)and to allow it to discharge through the water line (45) and the continuous-flow heater (52), so that a complete emptying of the water tank (10) takes place.

2. The coffee machine (110) according to claim 1, wherein the drainage device (44) comprises a pump (51), which is embodied in such a manner that it can pump liquid from the water tank (10) continuously or in intervals.

3. The coffee machine (110) according to claim 1 or 2, wherein, in the filling mode, the control device (30, 30a) is furthermore designed to interrupt a connection of the water inlet (11) to the water connection (21), when the first filling level has been reached or exceeded.

4. The coffee machine (110) according to one of the preceding claims, wherein the at least one operating mode is either a filling mode, an emptying mode or a flushing mode.

5. The coffee machine (110) according to one of the preceding claims, wherein the signal of the at least one filling level sensor (41, 42) additionally specifies whether or not a second filling level of liquid inside the tank (10) has been reached or exceeded, wherein the second filling level identifies a larger volume than the first filling level.

6. The coffee machine (110) according to claim 5, wherein, in the flushing mode, the control device (30, 30a) is designed to connect the water inlet (11) to the water connection (21), when the second filling level has not been reached and has not been exceeded, and wherein, in the flushing mode, the control device (30, 30a) is furthermore designed to interrupt a connection of the water inlet (11) to the water connection (21), when the second filling level has been reached or exceeded.

7. The coffee machine (110) according to claim 5 or 6, wherein, in the filling mode, the control device (30, 30a) is designed to interrupt a connection of the water inlet (11) to the water connection (21) and to output a warning signal when the second filling level has been reached or exceeded.

8. The coffee machine (110) according to one of the preceding claims, wherein the control device (30, 30a) is furthermore designed to control the drainage device according to the signal of the at least one filling level sensor (41, 42) and the at least one operating mode continuously or in intervals.

9. The coffee machine (110) according to one of claims 1-8, comprising a valve (20), which is configured to be controlled by the control device (30, 30a) and which is designed to establish a fluid connection between the water inlet (11) and the water connection (21) and/or to separate a fluid connection between the water inlet (11) and the water connection (21).

10. The coffee machine (110) according to one of the preceding claims, wherein the at least one filling level sensor (41, 42) is additionally designed to determine a tank water hardness in the water tank in response to wetting with liquid and to transmit information relating to the tank water hardness to the control device (30, 30a) by means of the one signal, comprising an outlet (15) for letting a liquid out of the water tank (10) and comprising a filter (80) for deionizing or descaling a liquid, which is let out from the water tank (10) through the outlet (15).

11. The coffee machine (110) according to claim 10, comprising an additional water hardness sensor (43), which is arranged at the outlet (15) and which is designed to determine an outlet water hardness in response to a wetting with the liquid, which is let out through the outlet (15).

12. The coffee machine (110) according to claim 11, comprising a control electronics (30a),
wherein the additional water hardness sensor (43) is embodied to transmit information relating to the outlet water hardness to the control electronics (30a) by means of a signal,
wherein the control electronics (30a) is embodied to compare the information relating to the outlet water hardness to the information relating to the tank water hardness and to provide a signal, if the difference between the tank water hardness and the outlet water hardness is smaller than or equal to a predetermined value.

13. The coffee machine (110) according to claim 12, wherein the control electronics (30a) is embodied to control an operation of the coffee machine (110) and the control device (30) is an integral part of the control electronics (30a).

14. A method for cleaning the water tank (10) of a coffee machine (110) according to one of the preceding claims, wherein the method encompasses the following method steps:
- activating the filling mode and filling the water tank (10) up to a first filling level;
- adding cleaning agent, preferably decalcifier, into the water tank (10);
- activating the emptying mode and emptying the water tank (10);
- activating the flushing mode and filling the water tank (10) up to the second filling level;
- activating the emptying mode and emptying the water tank (10);
- activating the filling mode and filling of the water tank (10) up to the first filling level;
- activating the emptying mode and emptying the water tank (10), preferably emptying in intervals,
wherein the second filling level is higher than the first filling level.

## Revendications

1. Machine à café (110) avec un dispositif (100) pour préparer du liquide pour la machine à café (110), le dispositif (100) comportant :
- un réservoir d'eau (10) avec au moins une arrivée d'eau (11) pour remplir le réservoir d'eau (10), laquelle arrivée d'eau (11) est raccordable de manière activable, avec un raccord d'eau (21), en particulier avec un raccord d'eau pressurisé et de préférence avec un réseau d'eau potable, et avec une sortie (15) pour évacuer un liquide du réservoir d'eau (10),
- un dispositif de commande (30, 30a) pour activer l'arrivée d'eau (11) raccordable de manière activable, et
- au moins un capteur de niveau de remplissage (41, 42) pour générer un signal, lequel indique au moins si un premier niveau de remplissage de liquide à l'intérieur du réservoir d'eau (10) est ou n'est pas atteint ou dépassé,
et la machine à café (110) comportant en plus :
- un conduit d'eau (45), lequel est raccordé à la sortie (15) du réservoir d'eau (10) de telle manière qu'un liquide sorti du réservoir d'eau (10) par la sortie (15) peut s'écouler par le conduit d'eau (45),
- un chauffe-eau rapide (52) et
- une unité d'ébouillantage (60) pour ébouillanter du café, laquelle est reliée par le conduit d'eau (45) et le chauffe-eau rapide (52) au réservoir d'eau (10) de telle manière que de l'eau peut être amenée du réservoir d'eau (10) de l'unité d'ébouillantage (60) par le conduit d'eau (45) et le chauffe-eau rapide (52) pour permettre d'ébouillanter du café,
au moins un capteur de niveau de remplissage (41, 42) raccordable ou étant raccordé au dispositif de commande (30, 30a) pour transmettre le signal et le dispositif de commande (30, 30a) étant conçu pour activer l'arrivée d'eau (11) en fonction du signal d'au moins un capteur de niveau de remplissage (41, 42) et d'au moins un mode de fonctionnement,
le mode de fonctionnement étant selon le besoin un mode de remplissage ou un mode de vidange,
le dispositif comportant en outre un système de vidange (44) pouvant être activé pour vider du liquide du réservoir d'eau (10) par la sortie (15),
le dispositif de commande (30, 30a) étant en plus conçu pour relier en mode de remplissage l'arrivée d'eau (11) au raccord d'eau (21), si le premier niveau de remplissage n'est pas atteint et pas dépassé et pour interrompre en mode de vidange une liaison de l'arrivée d'eau (11) avec le raccord d'eau (21) indépendamment du premier niveau de remplissage, et
le dispositif de commande (30, 30a) étant conçu pour amener le dispositif de vidange (44) par la commande du dispositif de vidange (44) à vidanger le liquide du réservoir d'eau (10),
**caractérisée en ce que**
le dispositif de commande (30, 30a) est conçu pour interrompre en mode de vidange une liaison de l'arrivée d'eau (11) avec le raccord d'eau (21) et amener le dispositif de vidange (44) à vider complètement par la sortie (15) et à faire s'écouler à travers le conduit d'eau (45) et le chauffe-eau rapide (52) une quantité de liquide contenue dans le réservoir d'eau (10) de manière à ce qu'une vidange complète du réservoir d'eau (10) se produise.

2. Machine à café (110) selon la revendication 1, le dispositif de vidange (44) comportant une pompe (51), laquelle est constituée de telle manière qu'elle peut pomper de façon continue ou par intervalles du liquide depuis le réservoir d'eau (10).

3. Machine à café (110) selon la revendication 1 ou 2, le dispositif de commande (30, 30a) étant conçu par ailleurs pour interrompre en mode de remplissage une liaison de l'arrivée d'eau (11) avec le raccord d'eau (21), si le premier niveau de remplissage est atteint ou dépassé.

4. Machine à café (110) selon l'une quelconque des revendications précédentes, un mode de fonctionnement étant au moins, selon besoin, un mode de remplissage, un mode de vidange ou un mode de rinçage.

5. Machine à café (110) selon l'une quelconque des revendications précédentes, le signal d'au moins un capteur de niveau de remplissage (41, 42) indiquant en plus si un deuxième niveau de remplissage de liquide à l'intérieur du réservoir d'eau (10) est ou n'est pas atteint ou dépassé, le deuxième niveau de remplissage désignant un volume plus important que le premier niveau de remplissage.

6. Machine à café (110) selon la revendication 5, le dispositif de commande (30, 30a) étant conçu pour relier en mode de rinçage l'arrivée d'eau (11) au raccord d'eau (21), si le deuxième niveau de remplissage n'est pas atteint et pas dépassé et le dispositif de commande (30, 30a) étant conçu par ailleurs pour interrompre en mode de rinçage une liaison de l'arrivée d'eau (11) avec le raccord d'eau (21), si le deuxième niveau de remplissage est atteint ou dépassé.

7. Machine à café (110) selon la revendication 5 ou 6, le dispositif de commande (30, 30a) étant conçu pour interrompre en mode de remplissage une liaison de l'arrivée d'eau (11) avec le raccord d'eau (21) et émettre un signal d'alarme, si le deuxième niveau de remplissage est atteint ou dépassé.

8. Machine à café (110) selon l'une quelconque des revendications précédentes, le dispositif de commande (30, 30a) étant conçu en outre pour activer en continu ou par intervalles le dispositif de vidange en fonction du signal d'au moins un capteur de niveau de remplissage (41, 42) et d'au moins un mode de fonctionnement.

9. Machine à café (110) selon l'une quelconque des revendications 1-8 avec une soupape (20) pouvant être commandée par le dispositif de commande (30, 30a), laquelle est constituée pour établir une liaison de fluide en l'arrivée d'eau (11) et le raccord d'eau (21) et/ou séparer une liaison de fluide entre l'arrivée d'eau (11) et le raccord d'eau (21).

10. Machine à café (110) selon l'une quelconque des revendications précédentes, au moins un capteur de niveau de remplissage (41, 42) étant en plus conçu pour déterminer une dureté de l'eau du réservoir lors d'un mouillage avec du liquide dans le réservoir d'eau et transmettre une information sur la dureté de l'eau du réservoir au moyen d'un signal au dispositif de commande (30, 30a), avec une sortie (15) pour évacuer un liquide du réservoir d'eau (10) et avec un filtre (80) pour déminéraliser ou détartrer un liquide sorti du réservoir d'eau (10) par la sortie (15).

11. Machine à café (110) selon la revendication 10, avec un capteur de dureté d'eau supplémentaire (43), lequel est disposé à la sortie (15) et est conçu pour déterminer une dureté de l'eau évacuée lors d'un mouillage avec le liquide sorti par la sortie (15).

12. Machine à café (110) selon la revendication 11, avec un système électronique de commande (30a),
le capteur de dureté d'eau supplémentaire (43) étant constitué pour transmettre au système électronique de commande (30a) au moyen d'un signal une information sur la dureté de l'eau évacuée,
le système électronique de commande (30a) étant constitué pour comparer l'information sur la dureté de l'eau évacuée à l'information relative à la dureté de l'eau du réservoir et fournir un signal, au cas où la différence entre la dureté de l'eau du réservoir et la dureté de l'eau évacuée est plus faible ou égale à une valeur prédéfinie.

13. Machine à café (110) selon la revendication 12, le système électronique de commande (30a) étant constitué pour commande un fonctionnement de la machine à café (110) et le dispositif de commande (30) faisant partie intégrante du système électronique de commande (30a).

14. Procédé destiné à nettoyer le réservoir d'eau (10) d'une machine à café (110) selon l'une quelconque des revendications précédentes, le procédé comprenant les étapes suivantes :
- activation du mode de remplissage et remplissage du réservoir d'eau (10) jusqu'à un premier niveau de remplissage,
- addition d'un agent de nettoyage, de préférence un détartrant, dans le réservoir d'eau (10),
- activation du mode de vidange et vidange du réservoir d'eau (10),
- activation du mode de rinçage et remplissage du réservoir d'eau (10) jusqu'au deuxième niveau de remplissage,
- activation du mode de vidange et vidange du réservoir d'eau (10),
- activation du mode de remplissage et remplissage du réservoir d'eau (10) jusqu'au premier niveau de remplissage,
- activation du mode de vidange et vidange, de préférence vidange par intervalles, du réservoir d'eau (10),
le deuxième niveau de remplissage étant plus haut que le premier niveau de remplissage.
